# FASCICULE DE BREVET EUROPEEN

(11) **EP 1 042 520 B1**
(45) Date de publication et mention de la délivrance du brevet: **24.12.2008**
(21) Numéro de dépôt: 99947590.8
(22) Date de dépôt: 15.10.1999
(51) Int. Cl.: C22C 1/04, B22F 1/00

(54) **UTILISATION DE POUDRES METALLIQUES PREALLIEES A BASE DE TUNGSTENE ET/OU MOLYBDENE ET/OU NICKEL POUR LA FABRICATION DE PIECES FRITTEES**
VERWENDUNG VON VORLEGIERTEN METALLPULVERN AUF BASIS VON WOLFRAM UND/ODER MOLYBDAEN UND/ODER NICKEL ZUR HERSTELLUNG VON GESINTERTEN TEILEN
USE OF PREALLOYED METAL POWDERS BASED ON TUNGSTEN AND/OR MOLYBDENUM AND/OR NICKEL FOR PRODUCING SINTERED PARTS

(30) Priorité: 16.10.1998 FR 9813032
(43) Date de publication de la demande: 11.10.2000
(73) Titulaire: EUROTUNGSTENE POUDRES S.A., F-38100 Grenoble (FR)
(72) Inventeur: BONNEAU, Maxime, F-38120 Le Fontanil (FR); LARTIGUE, Jean-François, F-38700 La Tronche (FR); MANIAK, Jean, F-38000 Grenoble (FR)
(74) Mandataire: Neyret, Daniel Jean Marie
(86) Numéro de dépôt international: PCT/FR1999/002518
(87) Numéro de publication internationale: WO 2000/023630

(56) Documents cités:
- EP-A- 0 774 315
- WO-A-92/20481
- GB-A- 1 447 518
- US-A- 4 913 731
- US-A- 5 112 388

## Description

L'invention concerne l'utilisation de poudres métalliques microniques à base de tungstène et/ou de molybdène et de métaux de transition 3d.

on sait qu'une branche importante de la métallurgie est fondée sur la fabrication de poudres qui peuvent être utilisées notamment comme pigments ou dans la réalisation de pièces frittées.

Les pièces métalliques utilisées concrètement sont généralement des alliages métalliques. On rappelle que les alliages métalliques, selon les caractéristiques de solubilité mutuelle des métaux constituants, peuvent être des systèmes monophasés ou polyphasés.

La réalisation de pièces frittées à l'aide d'un mélange de poudres de métaux purs soulève des difficultés lorsqu'on veut obtenir une pièce frittée homogène.

Il est donc souhaitable de préparer des poudres préalliées, dans lesquelles chaque particule contient les métaux constituants de l'alliage dans les mêmes proportions que l'ensemble de la poudre.

Pour obtenir des poudres préalliées, on peut notamment utiliser des techniques de coprécipitation de sels ou d'hydroxydes métalliques. Les coprécipités, séchés et éventuellement broyés, sont ensuite soumis à l'action d'un agent réducteur, par exemple l'hydrogène, pour obtenir des poudres métalliques.

Lorsqu'on souhaite opérer au départ de sels solubles dans l'eau, on peut préparer des suspensions contenant les sels ou hydroxydes métalliques dans les proportions requises, et soumettre les suspensions obtenues à une opération de co-séchage par atomisation. On obtient ainsi des particules dont la composition en sels et/ou hydroxydes métalliques est homogène. Ces particules peuvent être ensuite réduites en poudres métalliques préalliées à l'aide d'un agent réducteur.

On sait que les techniques d'élaboration des poudres métalliques conduisent généralement à l'obtention d'agglomérats constitués par plusieurs grains élémentaires reliés entre eux ponctuellement. Les techniques de broyage permettent généralement d'augmenter le nombre de grains élémentaires individuels, et de réduire le nombre de grains élémentaires présents dans les agrégats.

Comme indiqué ci-dessus, l'invention concerne l'utilisation de poudres microniques. Dans la présente demande, on appelle "poudres microniques" des poudres telles que la plus grande dimension des grains élémentaires est supérieure à 200 nm et inférieure ou égale à 5 micromètres. Les dimensions des grains élémentaires peuvent être mesurées notamment au microscope électronique à balayage. Les poudres microniques doivent être distinguées des poudres nanométriques, dont les grains élémentaires ont des dimensions inférieures à 100 nm environ.

L'invention concerne l'utilisation pour la fabrication de pièces frittées, de poudres métalliques à base de tungstène et/ou de molybdène et à base d'au moins un métal de transition 3d choisi parmi le fer, le cobalt, le nickel et le cuivre.

Les poudres utilisées dans l'invention présentent des propriétés intéressantes dans diverses applications, comme cela sera précisé dans la suite de la description.

L'invention a donc pour objet l'utilisation pour la fabrication d'une pièce frittée d'une poudre métallique préalliée conformément à la revendication 1 ; ainsi qu'une pièce frittée obtenue par cette utilisation.

Dans la présente demande, sauf indications contraires, une poudre "constituée essentiellement" de tel et tel métal (constituants "essentiels") contient chacun de ces métaux à raison de plus de 3 % en poids. Un tel constituant, lorsqu'il peut être utilisé à raison de moins de 3 % est alors considéré comme un additif dans les alliages où il est présent dans de telles faibles proportions.

Les additifs peuvent être en pratique tous métaux ou métalloïdes susceptibles d'améliorer les propriétés des poudres ou des pièces frittées. Dans une poudre donnée, les additifs peuvent être choisis notamment parmi tous les métaux qui ne sont pas des constituants essentiels (tels que définis ci-dessus) de la poudre, ou les oxydes de ces métaux.

La présence d'additifs peut avoir notamment pour but d'améliorer les opérations de frittage. On sait que la présence d'un additif, même en très faibles quantités (par exemple de l'ordre de 0,1 %) permet souvent d'abaisser notablement la température de frittage.

Le choix des additifs et de leur quantité peut être déterminé par de simples expériences de routine.

Dans la présente demande, les pourcentages de métaux sont des pourcentages en poids, rapportés au poids total des métaux de la poudre.

On sait que les poudres métalliques ont tendance à s'oxyder à l'air, cette oxydation augmentant avec le temps et avec le caractère plus ou moins oxydable des métaux présents. Dans les poudres de l'invention, la teneur en oxygène total (mesurée par réduction à l'aide de carbone), au sortir du four où a été opérée la réduction des hydroxydes et/ou des sels métalliques, est généralement infèrieure à 2 % par rapport au poids total de la poudre. En optimisant les conditions opératoires de la réduction par l'hydrogène, on peut obtenir, si désiré, des teneurs en oxygène nettement plus faibles.

Les poudres de l'invention peuvent être préparées selon les méthodes de coprécipitation et éventuellement de séchage par atomisation, suivies de réduction, qui ont été décrites ci-dessus et qui sont connues en soi. Le choix de la température et du temps de réduction peut être déterminé à l'aide de simples expériences de routine, notamment par analyse thermogravimétrique. On peut optimiser la taille des grains élémentaires en sachant que cette traille augmente avec la température et avec la durée du chauffage, pendant l'opération de réduction.

On va décrire plus particulièrement ci-après certaines familles de poudres utilisables ou non dans le cadre de l'invention. Bien entendu, l'invention porte aussi sur des pièces frittées obtenues à partir de telles poudres.

Parmi ces poudres, on citera notamment :
(a) celles qui sont constituées essentiellement de 35 à 95 % de tungstène et/ou de molybdène, de 5 à 65 % de cuivre, et de 0 à 3 % d'au moins un additif ; les additifs peuvent être choisis notamment parmi le fer et le cobalt ; chaque additif, s'il est présent, peut représenter par exemple moins de 1 % du poids total des métaux de la poudre.
   Parmi ces poudres, on citera en particulier celles contenant de 50 % à 95 % de tungstène et de 5 % à 50 % de cuivre, notamment de 10 à 25 % de cuivre.
   On peut citer également les poudres constituées essentiellement de 35 à 95 % de molybdène et de 5 à 65 % de cuivre, et notamment de 10 à 50 % de cuivre.
   Les poudres à base de tungstène et/ou de molybdène et de cuivre peuvent être utilisées notamment dans la réalisation par frittage de pièces de contact électrique ou d'électrodes d'électro-érosion. Elles possèdent notamment de bonnes propriétés de résistance aux effets nuisibles de l'arc électrique (corrosion, oxydation).
   De telles poudres, qui ne sont pas utilisables dans le cadre de l'invention peuvent également servir à la réalisation de pièces frittées destinées à être utilisées comme puits thermiques (ou radiateurs) dont la fonction est d'évacuer la chaleur dans certains appareils.
(b) celles qui sont constituées essentiellement de 80 % à 99,5 % en poids de tungstène, de 0,5 % à 15 % de nickel, de 0 à 10 % en poids de fer, de 0 à 10 % en poids de cuivre, et de 0 à 3 % d'au moins un additif.
   On peut utiliser comme additif, notamment, le cobalt, généralement dans une proportion non supérieure à 1 % en poids par rapport au poids total des métaux de la poudre. On peut utiliser également de faibles proportions (par exemple de 0 à 1 à) de cuivre, ce dernier étant alors considéré comme un additif.
   Parmi ces poudres, on citera en particulier celles qui contiennent de 90 à 95 % en poids de tungstène ; et notamment celles qui sont constituées essentiellement de tungstène, de nickel et de fer, et qui peuvent contenir par exemple comme additifs de 0 à 1 % en poids de cobalt et/ou de 0 à 1 % en poids de cuivre.
   Parmi ces poudres, on citera également celles constituées essentiellement de tungstène, de nickel et de cuivre et contenant de 0 à 1 % de fer et de 0 à 1 % en poids de cobalt.
   De telles poudres, qui ne sont pas utilisables dans le cadre de l'invention de densité élevée, peuvent servir notamment à préparer par frittage des masses d'équilibrage, des centrales inertielles, des porte-outils, des écrans anti-rayonnement, ou encore des pièces d'armement.
(c) celles constituées essentiellement de 5 à 60 % en poids de tungstène et/ou de molybdène, de 0 à moins de 50 % en poids de fer, de 0 à 40 % en poids de cobalt, de 0 à 80 % en poids de nickel, de 0 à 50 % en poids de cuivre, et de 0 à 3 % d'au moins un additif.
   Parmi ces poudres, on citera en particulier comme étant utilisables dans le cadre de l'invention celles contenant de 5 % à 60 % en poids de tungstène et/ou de molybdène, de 20 % à 60 % en poids de nickel et/ou de cuivre, de 20 % à moins de 50 % en poids de fer et jusqu'à 30 % en poids de cobalt, à titre de constituants essentiels, et en particulier celles contenant de 20 à 60 % de nickel et éventuellement, comme additif, de 0 à 1 % de cuivre.
   On citera aussi, parmi ces poudres, celles, qui ne sont pas utilisables dans le cadre de l'invention constituées essentiellement de 20 % à 60 % en poids de tungstène et/ou de molybdène, de 10 % à 40 % en poids de cobalt et de 10 % à 50 % en poids de cuivre, et éventuellement du fer comme additif.
   De telles poudres peuvent être utilisées notamment dans la fabrication par frittage d'outils diamantés, à la place des liants à base de cobalt utilisés classiquement.
   On citera enfin comme étant utilisables dans le cadre de l'invention les poudres constituées essentiellement de 15 à 40 % de cuivre, de 50 à 80 % de nickel et de 5 à 20 % de molybdène.
   Ces poudres peuvent être mélangées, comme additif, à de la poudre de for, et éventuellement à du carbone (par exemple graphite) pour obtenir des aciers frittés.
(d) celles constituées essentiellement de 5 % à 40 % en poids de tungstène et/ou de molybdène, de 60 % à 95 % en poids de nickel, et de 0 à 3 % en poids d'un additif, l'additif étant choisi par exemple parmi le cobalt, le fer et le cuivre.
   On citera en particulier les poudres contenant de 5 à 30 % de tungstène et/ou de molybdène et notamment comme étant utilisables dans le cadre de l'invention celles qui sont constituées essentiellement de 5 à 30 % de tungstène et de 60 à 95 % de nickel.
   De telles poudres peuvent servir de liants dans la préparation par frittage d'outils diamantés. Un tel liant améliore les propriétés mécaniques des outils diamantés.
(e) celles constituées essentiellement de 1 à 10 % en poids de tungstène et/ou de molybdène, de 20 à 80 % en poids de cobalt, de 20 à 80 % en poids de nickel et de 0 à 3 % en poids d'un additif.

Parmi ces poudres, qui ne sont pas utilisables dans le cadre de l'invention on citera notamment celles constituées essentiellement de molybdène, de cobalt et de nickel, et éventuellement d'au moins un additif.

De telles poudres peuvent être utilisées notamment comme liants dans la préparation par frittage de cermets, c'est-à-dire d'outils de coupe ou d'abrasion contenant du carbure de titane.

L'invention concerne l'utilisation de poudres de compositions telles que définies précédemment comme étant utilisables dans le cadre de l'invention dans la réalisation de pièces frittées utilisables comme contacts électriques, puits thermiques, électrodes d'électro-érosion, masses d'équilibrage mécanique; centrales inertielles, porte-outils, écrans anti-rayonnement, pièces d'armement, aciers frittés ou outils de coupe ou d'abrasion diamantés ou au carbure de titane. Les domaines d'application des diverses catégories de poudres ont été précisés ci-dessus.

D'une façon générale, ces poudres utilisées dans l'obtention de pièces frittées, présentent l'avantage d'améliorer les propriétés mécaniques ou physiques des pièces obtenues et/ou l'avantage de faciliter le frittage en permettant notamment d'opérer à des températures et/ou des pressions pas trop élevées et/ou d'améliorer la densification des pièces frittées.

Certains des exemples suivants illustrent l'invention.

### EXEMPLES 1 à 4

Les matières premières employées sont le chlorure de cobalt CoCl₂, utilisé sous forme de solution aqueuse à 170,6 g/L de cobalt ; le chlorure ferrique cristallisé FeCl₃, 6H₂O, pureté 98 % ; le chlorure de nickel cristallisé NiCl₂, 6H₂O, pureté 97 % ; le chlorure cuivrique cristallisé CuCl₂, 2H₂O, pureté 96 %.

Par addition des sels métalliques à la solution de chlorure de cobalt, on prépare des solutions contenant environ 200 g/litre des différents métaux. La solution de sels métalliques est chauffée à 60°C et versée dans une solution aqueuse d'hydroxyde de sodium, elle-même chauffée à 60°C, sous agitation. La quantité d'hydroxyde de sodium est calculée de façon à utiliser un excès de 10 % d'hydroxyde de sodium par rapport à la stoechiométrie de formation des hydroxydes à partir de sels. On maintient l'agitation pendant 1 heure, à la température de 60°C. On filtre. On lave 3 fois le précipité en le remettant en suspension dans 3,5 L d'eau chauffée à 60°C puis en filtrant. On remet ensuite en suspension dans l'eau le précipité d'hydroxydes et on ajoute sous agitation du métatungstate d'ammonium hydraté appelé ci-après AMT, contenant 85,98 % d'oxyde WO3, sous la forme d'une solution aqueuse, en agitant fortement.

On a préparé de la façon indiquée ci-dessus des suspensions d'hydroxydes contenant de l'AMT au départ des produits suivants :
- Composition n°1 : 293 cm³ de la solution de chlorure de cobalt ; 404,1 g de chlorure ferrique ; 233,7 g de chlorure de nickel et 20,53 g de métatungstate d'ammonium (AMT) ;
- Composition n°2 : 293 cm³ de la solution de chlorure de cobalt ; 101 g de chlorure ferrique ; 208,7 g de chlorure de nickel et 117,34 g d'AMT ;
- Composition n°3 : 293 cm³ de chlorure de cobalt ; 203,7 g de chlorure cuivrique et 117,34 g d'AMT ;
- Composition n°4 : 667,8 g de chlorure de nickel et 58,67 g d'AMT.

Les suspensions d'hydroxydes métalliques contenant de l'AMT ainsi obtenues ont été séchées et pulvérisées dans un sécheur atomiseur ("spray dryer").

Les poudres obtenues ont ensuite été réduites dans un four sous atmosphère d'hydrogène. Le four est divisé en trois zones dont les températures sont réglées indépendamment. Les échantillons de poudres sont automatiquement déplacés dans le four de façon que le temps de passage total soit de 9 minutes et demie. Les zones de températures ont été réglées à 600-700-750°C pour les compositions n°1 à n°3 et 500-600-650°C pour la composition n°4.

Les poudres obtenues après réduction ont la composition suivante (% en poids) :
Poudre n°1 utilisable dans le cadre de l'invention : W 9,6 ; Co 23,4 ; Fe 37,9 ; Ni 27,4 ; oxygène 1,7
Poudre n°2 non utilisable dans le cadre de l'invention : W 39 ; Co 23,8 ; Fe 10,9 ; Ni 26,6 ; oxygène 0,5
Poudre n°3 non utilisable dans le cadre de l'invention : W 53,8 ; Co 23,7 ; Cu 20,5 ; oxygène 2
Poudre n°4 utilisable dans le cadre de l'invention : W 24,75 ; Ni 74,7 ; oxygène 0,55

La teneur en oxygène mesurée est l'oxygène total.

Les surfaces spécifiques (BET) sont respectivement de 5,4 ; 1,77 ; 5,25 et 2,3 m²/g.

On obtient des résultats analogues en effectuant la réduction dans un four à température constante : à 725°C (poudres n°1 à 3) ou à 625°C (poudre n°4).

Les poudres sont ensuite soumises à l'action d'un broyeur à jet d'azote de façon à réduire la taille des agglomérats.

### Essais de frittage

Le frittage est effectué à l'aide d'un appareil haute pression haute température. La matrice employée est une matrice de graphite à 4 poinçons cylindriques. Les pièces frittées sont des pions de 20 mm de diamètre et de 5 mm d'épaisseur. La quantité de poudre nécessaire pour obtenir une pièce frittée ayant ces dimensions est calculée en fonction de la densité théorique. On chauffe l'échantillon de poudre de façon à atteindre la température de frittage au bout de 10 minutes. Pendant les 7 premières minutes, la pression exercée est de 15 MPa. Ensuite, la pression exercée est de 32,5 MPa. On observe un palier de température pendant 2 minutes puis on arrête le chauffage et on maintient encore pendant 1 minute la pression de 32,5 MPa.

Les températures de frittage étaient de 800°C pour la poudre n°1, 1000°C pour la poudre n°2, 950°C pour la poudre n°3 et 800°C pour la poudre n°4.

### EXEMPLE 5

On prépare une solution aqueuse contenant les chlorures de cuivre et de nickel en mélangeant 6,61 litres d'une solution de chlorure cuivrique (à 211 g/l en cuivre) avec 17,65 litres d'une solution de chlorure de nickel (à 175,9 g/l en nickel). On verse cette solution sous agitation dans 50 litres d'une solution d'hydroxyde de sodium titrant 132 g/l chauffée à 60°C, de façon à effectuer la coprécipitation des hydroxydes de cuivre et de nickel. Le précipité ainsi obtenu est ensuite séparé par filtration puis lavé. On remet le précipité on suspension dans l'eau à raison d'environ 5 litres d'eau pour 1 kg de précipité. On ajoute à cette suspension une solution d'acide molybdique commercial titrant 113 g/l en molybdène à raison de 0,35 litre de cette solution molybdique par kg de précipité. Par séchage dans un sécheur atomiseur, puis réduction sous hydrogène, et puis désagglomération au broyeur à marteaux, on obtient une poudre métallique non utilisable dans le cadre de l'invention titrant 0,24 % en oxygène, 59,7 % en nickel, 27,1 % en cuivre et 12,7 % en molybdène. Au microscope électronique à balayage, on mesure une taille de grain élémentaire moyenne d'environ 1 µm.

Le produit commercial appelé "acide molybdique" est constitué essentiellement de molybdate d'ammonium.

### EXEMPLE 6

On prépare une solution aqueuse contenant les chlorures de cobalt et de nickel en mélangeant 14 litres d'une solution de chlorure de cobalt à 172 g/l de cobalt avec 13,7 litres d'une solution de chlorure de nickel à 175,9 g/l en nickel. On verse cette solution sous agitation dans 40 litres d'une solution d'hydroxyde de sodium titrant 187,5 g/l chauffée à 60°C, de façon à effectuer la coprécipitation des hydroxydes de cobalt et de nickel. Le précipité ainsi obtenu est ensuite séparé par filtration, puis lavé. On remet le précipité en suspension dans l'eau à raison d'environ 5 litres d'eau pour 1 kg de précipité. On ajoute à cette suspension une solution d'acide molybdique titrant 23,1 g/l en molybdène, à raison de 0,7 litre de solution molybdique par kg de précipité. Par séchage dans un sécheur atomiseur, puis réduction sous hydrogène, et désagglomération au broyeur à marteaux, on obtient une poudre métallique non utilisable dans le cadre de l'invention titrant 0,37 % en oxygène, 47 % en cobalt, 47 % en nickel et 5,1 % en molybdène. Au microscope électronique à balayage, on mesure une taille de grain élémentaire moyenne d'environ 0,5 µm. La surface spécifique mesurée par la méthode BET est de 1,79 m²/g.

Cette poudre est alors compactée à froid en éprouvettes parallélépipédiques d'environ 60 % de densité relative. Par une opération de frittage en four sous hydrogène (montée en 5 heures à 1100°C, puis palier de 1 heure à 1100°C, puis refroidissement en 12 heures environ) ces éprouvettes acquièrent une densité égale à 97,3 % de la densité théorique. Au microscope optique, la structure d'une section transversale polie de la pièce frittée apparaît comme très fine et très homogène.

### EXEMPLES 7 à 10

De façon analogue, on a préparé des poudres non utilisable dans le cadre de l'invention contenant (% en poids) :
- W 93,4 ; Ni 4 ; Cu 2,4 ; oxygène 0,11
   Taille moyenne des grains élémentaires : 0,5 µm
- W 79,9 ; Cu 19,9 ; oxygène 0,14
   Taille moyenne des grains élémentaires : 0,5 µm
   Surface spécifique (BET) : 0,73 m²/g
- W 79,7 ; Cu 19,1 ; Co 1,1 ; oxygène 0,14
- Mo 88,5 ; Cu 10,4 ; oxygène 0,17
   Taille moyenne des grains élémentaires : 0,5 µm

## Revendications

1. Utilisation, pour la fabrication d'une pièce frittée, d'une poudre métallique préalliée constituée :
- à titre de constituants essentiels de tungstène et/ou de molybdène, et d'au moins un métal de transition choisi parmi le fer, le cobalt, le nickel et le cuivre avec chacun des constituants essentiels étant présents à raison de plus de 3 %, et
- éventuellement d'au moins un additif,
la teneur en fer étant inférieure à 50% en poids et la teneur totale en additifs étant inférieure à 3% en poids, par rapport au poids total des métaux,
ladite poudre métallique préalliée ayant des dimensions de grains élémentaires, mesurées au microscope électronique à balayage, supérieures à 200 nm et inférieure ou égales à 5 micromètres,
ladite poudre étant obtenue par coprécipitation de sels et/ou d'hydroxydes, et choisie parmi :
a) une poudre constituée à titre de constituants essentiels de 5% à 60% en poids de tungstène et/ou de molybdène, de 20 à 60% en poids de nickel et/ou de cuivre, ainsi que de fer à raison de 20 à moins de 50% en poids, de cobalt à une teneur non supérieure à 30% en poids, et de 0 à moins de 3% d'au moins un additif ;
b) une poudre constituée à titre de constituants essentiels de 15 à 40% de cuivre, de 50 à 80% de nickel et de 5 à 20% de molybdène ;
c) une poudre constituée à titre de constituants essentiels de 5% à 30% en poids de tungstène, de 60 à 95% en poids de nickel, et de 0 à moins de 3% en poids d'un additif.

2. Utilisation d'une poudre selon la revendication 1, ladite poudre étant constituée à titre de constituants essentiels de 5% à 60% en poids de tungstène et/ou de molybdène, de 20% à 60% en poids de nickel et/ou de cuivre, ainsi que de fer à raison de 20 à moins de 50% en poids, de cobalt à une teneur non supérieure à 30% en poids, et de 0 a moins de 3% d'au moins un additif.

3. Utilisation d'une poudre selon la revendication 2, ladite poudre contenant de 20% à 60% de nickel.

4. Utilisation d'une poudre selon la revendication 3, ladite poudre contenant du cuivre comme additif.

5. Utilisation d'une poudre selon la revendication 1, ladite poudre étant constituée à titre de constituants essentiels de 15% à 40% de cuivre, de 50 à 80% de nickel et de 5 à 20% de molybdène.

6. Utilisation d'une poudre selon la revendication 1, ladite poudre étant constituée à titre de constituants essentiels de 5% à 30% en poids de tungstène, de 60% à 95% en poids de nickel, et de 0 à moins de 3% en poids d'un additif.

7. Utilisation d'une poudre selon la revendication 6, ladite poudre comprenant au moins un additif choisi parmi le cobalt, le fer et le cuivre.

8. Pièce frittée obtenue à l'aide de l'utilisation d'une poudre telle que définie dans l'une quelconque des revendications 1 à 7.

## Claims

1. Use of a master-alloy metal powder for the production of a sintered part containing:
• as essential constituents: tungsten and/or molybdenum and at least one transition metal selected from iron, cobalt, nickel and copper, wherein each of the essential constituents is present to the amount of more than 3%, and
• possibly at least one additive,
wherein the iron content is less than 50% by weight and the total additive content is less than 3% by weight in relation to the total weight of the metals,
wherein the basic particle sizes of said master-alloy metal powder measured by scanning electron microscope are more than 200 nm and less than or equal to 5 micrometres,
wherein said powder is obtained by the coprecipitation of salts and/or hydroxides and is selected from among the following:
a) a powder containing as essential constituents: 5% to 60% by weight of tungsten and/or molybdenum, 20% to 60% by weight of nickel and/or copper, and also iron to the amount of 20 to less than 50% by weight, cobalt with a content of not more than 30% by weight, and 0 to less than 3% of at least one additive;
b) a powder containing as essential constituents: 15 to 40% of copper, 50 to 80% of nickel and 5 to 20% of molybdenum;
c) a powder containing as essential constituents: 5% to 30% by weight of tungsten, 60 to 95% by weight of nickel and 0 to less than 3% by weight of an additive.

2. Use of a powder according to claim 1, wherein said powder contains as essential constituents: 5% to 60% by weight of tungsten and/or molybdenum, 20% to 60% by weight of nickel and/or copper, and also iron to the amount of 20 to less than 50% by weight, cobalt with a content of not more than 30% by weight, and 0 to less than 3% of at least one additive.

3. Use of a powder according to claim 3, wherein said powder contains 20% to 60% of nickel.

4. Use of a powder according to claim 3, wherein said powder contains copper as additive.

5. Use of a powder according to claim 1, wherein said powder contains as essential constituents: 15% to 40% of copper, 50 to 80% of nickel and 5 to 20% of molybdenum.

6. Use of a powder according to claim 1, wherein said powder contains as essential constituents: 5% to 30% by weight of tungsten, 60% to 95% by weight of nickel and 0 to less than 3% by weight of an additive.

7. Use of a powder according to claim 5, wherein said powder contains at least one additive selected from cobalt, iron and copper.

8. Sintered part obtained by using a powder such as defined in any one of claims 1 to 7.

## Patentansprüche

1. Verwendung eines vorlegierten Metallpulvers für die Herstellung eines gesinterten Teils, bestehend aus:
- als essentielle Bestandteile Wolfram und/oder Molybdän und mindestens einem Übergangsmetall, das aus Eisen, Kobalt, Nickel und Kupfer ausgewählt ist, wobei jeder der essentiellen Bestandteile in einem Anteil von mehr als 3% vorhanden ist, und
- gegebenenfalls mindestens einem Zusatzstoff,
wobei im Verhältnis zu dem Gesamtgewicht der Metalle der Gehalt an Eisen weniger als 50 Gew.-% beträgt und der Gesamtgehalt an Zusatzstoffen weniger als 3 Gew.-% beträgt,
wobei das vorlegierte Metallpulver elementare Korn-Abmessungen aufweist, die mit dem Rasterelektronenmikroskop gemessenen werden, die größer als 200 nm und kleiner oder gleich 5 Mikrometer sind,
wobei das Pulver mittels Kopräzipitation von Salzen und/oder Hydroxiden erhalten wird und ausgewählt wird aus:
a) einem Pulver, das aus den folgenden essentiellen Bestandteilen gebildet ist: 5 Gew.-% bis 60 Gew.-% Wolfram und/oder Molybdän, 20 Gew.-% bis 60 Gew.-% Nickel und/oder Kupfer, sowie Eisen in einem Anteil von 20 Gew.-% bis weniger als 50 Gew.-%, Kobalt mit einem Gehalt von nicht mehr als 30 Gew.-%, und 0% bis weniger als 3% mindestens eines Zusatzstoffs,
b) einem Pulver, das aus den folgenden essentiellen Bestandteilen gebildet ist: 15% bis 40% Kupfer, 50% bis 80% Nickel und 5% bis 20% Molybdän,
c) einem Pulver, das aus den folgenden essentiellen Bestandteilen gebildet ist: 5 Gew.-% bis 30 Gew.-% Wolfram, 60 Gew.-% bis 95 Gew.-% Nickel, und 0 Gew.-% bis weniger als 3 Gew.-% eines Zusatzstoffs.

2. Verwendung eines Pulvers gemäß Anspruch 1, wobei das Pulver aus den folgenden essentiellen Bestandteilen gebildet ist: 5 Gew.-% bis 60 Gew.-% Wolfram und/oder Molybdän, 20 Gew.-% bis 60 Gew.-% Nickel und/oder Kupfer, sowie Eisen in einem Anteil von 20 Gew.-% bis weniger als 50 Gew.-%, Kobalt mit einem Gehalt von nicht mehr als 30 Gew.-%, und 0% bis weniger als 3% mindestens eines Zusatzstoffs.

3. Verwendung eines Pulvers gemäß Anspruch 2, wobei das Pulver 20% bis 60% Nickel aufweist.

4. Verwendung eines Pulvers gemäß Anspruch 3, wobei das Pulver als Zusatzstoff Kupfer aufweist.

5. Verwendung eines Pulvers gemäß Anspruch 1, wobei das Pulver aus den folgenden essentiellen Bestandteilen gebildet ist: 15% bis 40% Kupfer, 50% bis 80% Nickel und 5% bis 20% Molybdän.

6. Verwendung eines Pulvers gemäß Anspruch 1, wobei das Pulver aus den folgenden essentiellen Bestandteilen gebildet ist: 5 Gew.-% bis 30 Gew.-% Wolfram, 60 Gew.-% bis 95 Gew.-% Nickel und 0 Gew.-% bis weniger als 3 Gew.-% eines Zusatzstoffs.

7. Verwendung eines Pulvers gemäß Anspruch 6, wobei das Pulver mindestens einen Zusatzstoff aufweist, der aus Kobalt, Eisen und Kupfer ausgewählt ist.

8. Gesintertes Teil, das mit Hilfe der in einem der Ansprüche 1 bis 7 definierten Verwendung eines Pulvers erhalten wird.
